# EUROPEAN PATENT SPECIFICATION

(11) **EP 3 684 988 B1**
(45) Date of publication and mention of the grant of the patent: **30.03.2022**
(21) Application number: 17768802.5
(22) Date of filing: 19.09.2017
(51) Int. Cl.: E04G 11/20, E04G 21/04, B33Y 30/00, B21F 27/00

(54) **DEVICE FOR THE CONSTRUCTION OF HIGH RISING BUILDING STRUCTURES**
VORRICHTUNG ZUM BAU VON HOHEN GEBÄUDEN
DISPOSITIF POUR LA CONSTRUCTION DE STRUCTURES DE CONSTRUCTION À GRANDE ÉLÉVATION

(43) Date of publication of application: 29.07.2020
(73) Proprietor: TMS Tüfekçioglu Mühendislik Sanayi Ve Ticaret Anonim Sikerti, 41255 Kartepe (TR)
(72) Inventor: TÜFEKCI, Kubilay, 41255 Kartepe (TR)
(74) Representative: Habermann, Hruschka & Schnabel
(86) International application number: PCT/EP2017/073597
(87) International publication number: WO 2019/057267

(56) References cited:
- WO-A1-2016/166116
- CN-U- 203 794 498
- DE-A1-102005 062 406
- US-A1- 2015 300 036
- US-A1- 2017 203 468

## Description

### TECHNICAL AREA

This invention relates to a device for the construction of high rising building structures, such as skyscrapers, piers, towers etc., in particular with respect to self-climbing systems being used in connection with constructing e.g. steel-reinforced and concrete cores and walls for such high rising structures.

### PRIOR ART

In the respective field of technology, for example, Turkish application no. 2012/00313 describes a spring or pneumatically activated, linear, sliding type carrier headed, mutually independently dismountable guiding jaw system for a crane-independent, self-driven climbing formwork structure. While fixed to a steel-reinforced concrete and/or to a steel construction, said carrier head guides and carries the rail to which the climbing platform/formwork system is attached. Chinese application no. 105836640 describes a system which comprises first supporting parts, a bottom attaching unit, second supporting parts, a middle attaching unit and a top attaching unit. By means of the fixing device and method, a supporting attachment system does not need to be demounted, transferring and reassembling are not needed, all the supporting parts and the attaching units can be repeatedly used only through one sling, thus the construction period is shortened, and labour and material resources are saved.

A self-climbing scaffold system as known from e.g. publication MX 2014013127 A comprises rails and shoes fixed to concrete sections of the building and adapted for guiding the rail in a defined climbing direction.

From Chinese utility model no. 203794498 a built-in self-elevating tower crane device is known to be used in the field of concrete caisson construction. The built-in self-elevating tower crane device comprises a truss, a tower crane and a climbing system, wherein the tower crane is arranged above the truss, the bottom of the tower crane and the truss are welded into a whole, the truss is in a cross shape, the tower crane is welded at the cross intersection, the lower parts of four end parts of the truss are connected with a pair of climbing systems and four ends of the truss and the climbing system are both fixed on the inner lateral wall of the open caisson. The built-in self-elevating tower crane device has the advantages that the material can be saved, time and labour are saved, and the operation risk caused by height increase of the tower crane, when the construction height is too high, is avoided.

From publication CN 103466518 A a steel structure construction platform utilizing a large gradient self-climbing system and a telescopic platform system is known. By the adoption of the steel structure construction platform and the large gradient self-climbing system and the telescopic platform system thereof, the use of a tower crane can be reduced and the trouble of manual displacement can be prevented.

A self-elevating platform lifting device which allows for a dynamically detection of load is disclosed in publication CN 103015388 A, which is designed to achieve a more reliable and safer operation of pinion and rack lifting systems of a self-elevating drilling platform.

Chinese utility model no. 204024013 refers to a material lifting platform of the self-climbing type, in which a material platform outlet is not occupied by the lifting system, and therefore the material running efficiency is improved.

Further a control method which is used for controlling the balance of a tower crane during a lifting-up section-adding process is, for example, disclosed in CN 104045006 A.

A device for the construction of high rising building structures according to the preamble of claim 1 is e.g. known from US 2015/300036 A1 or WO 2016/166116 A1

In general, in the field of constructing and manufacturing high rising building structures, in which up to present mainly hydraulic climbing systems are utilized, still several technical issues have not been completely, satisfactorily and efficiently solved yet. Such technical and economic problems, for example, can be summarized as follows:
- Comparatively, technology in construction industry is lagging behind other industries. Construction industry did not sufficiently interact with new technologies; hence no significant productivity increase could be accomplished within the last 20-30 years.
- Specifically, high rise concrete structures such as cores of skyscrapers, highway piers, towers, industrial shafts/chimneys etc. are mostly cast in-situ steel reinforced concrete applications which require climbing formwork systems, high pressure concrete pumping units and tower cranes for rebar and material handling, where all these should be accompanied with accurate surveying services.
- Although hydraulic self climbing formwork systems have evolved within the last couple of decades still significant manpower is required not only for forming but for rebar assembling as well, hence, keeping the applications significantly labour intensive. Also assuming all these efforts being provided at high elevation decreases the efficiency together with productivity and increases occupational health safety risks much more.
- Another bottleneck is the geomatics precision in elevating the formwork systems. It is a very long time taking and problematic subject in the field of surveying to stay within the desired spatial tolerances in this type of constructions which require many repeating concrete pouring sessions.
- Construction formworks comprise many metallic and wooden components which all have their own, usually highly varying tolerance ranges bringing disadvantages during installation and displacement.
- Even though formwork could be elevated by automated self climbing systems, formwork accuracy is depending on intensive labour for alignment and plumbing together with surveying services. It's not a secret that these concrete shafts which must have perfect verticality, in reality, are slightly zigzagged structures within acceptable limits under current technological conditions.

Therefore, associated with the above-mentioned technical and economic problems, a very significant downtime has to be foreseen while the surveying engineers try to correct the shaft/core segment to the real perfect vertical alignment for the next pouring stage. Hence, the productivity of the whole system suffers after all, increasing unplanned costs like overhead costs, rental equipment costs, claims for the delays etc..

Furthermore, recently several research works have been conducted with respect to additive manufacturing processes to be utilized in connection with concrete. Actually, when using specific, quick-hardening concrete, it has been achieved to build, up to now, however, only smaller building structures by way of 3D-printing with such kind of concrete.

Based on the above, it is an object of the present invention to provide a new device for the construction of high rising building structures, which prove to be highly accurate, less labour-intensive and therefore more economic.

Such object is solved by a device for the construction of high rising building structures according to claim 1.

Thus, the present invention suggests a device for manufacturing of high rising building structures which comprises a self-climbing mechanism, a concrete application mechanism, a rebar arrangement mechanism and a levelling and dampening system, wherein said concrete application mechanism is configured to apply concrete by way of additive manufacturing, and further wherein the device further comprises a GPS-system (global positioning system).

The self-climbing mechanism and the concrete application mechanism are separately or commonly GPS-controlled by said GPS-system, so that the climbing movement of the self-climbing mechanism and the spatial progress with respect to an additive manufacturing of the concrete application mechanism are coordinated, which may be done by a corresponding control unit which controls the entire device and its modules.

Further, the rebar arrangement mechanism is GPS-controlled by said GPS-system as well, so that the spatial progress with respect to a reinforcement process by means of rebars is coordinated with the climbing movement of the self-climbing mechanism and/or the spatial progress with respect to the additive manufacturing of the concrete application mechanism.

Also, the levelling and dampening system may be GPS-controlled by said GPS-system, so that a stabilization process of the levelling and dampening system is coordinated with the climbing movement of the self-climbing mechanism and/or the spatial progress with respect to the additive manufacturing of the concrete application mechanism and/or the spatial progress with respect to the reinforcement process of the rebar arrangement mechanism.

The GPS-system can be positioned within the structure of the device at any suitable location. Several GPS-receivers can be used to control the entire manufacturing process, so to say in real-time.

In one embodiment of the device according to the invention the rebar arrangement mechanism may comprise at least one robot having a manipulator for cutting and/or bending rebar steel directly on site.

Alternatively, the rebar arrangement mechanism may comprise at least one robot having a manipulator for additively manufacturing rebar composites, which may be made from glass fibre reinforced polymers.

In a preferred embodiment of the device according to the present invention, the concrete application mechanism may comprise at least one robot having a manipulator for guiding at least one concrete application device. This concrete application device could be the nozzle of a pipe being directed to the end of the manipulator from a high pressure concrete pumping unit.

However, most preferably, the robot guides a nozzle of a concrete application system using specific quick-hardening concrete of a 3D concrete printing system.

The movements of both the robots of the rebar arrangement mechanism and of the concrete application mechanism upon construction may as such coordinated by means of the GPS-system and the control unit and even further coordinated in line with the climbing speed of the self-climbing mechanism.

The control unit would thus allow that the concrete application mechanism could comprise more than one robot, which robots are configured to apply concrete commonly at one position or separately at different positions. Also, several robots may be utilized in connection with the rebar arrangement.

In principle, the self-climbing mechanism comprises at least one platform, which platform supports the concrete application mechanism, the rebar arrangement mechanism and the levelling and dampening system, wherein the platform may comprise formwork and/or scaffolding devices in addition. Since it is very likely that workers are present on the platform and the scaffolding, it is preferred according to the invention that the robots being employed in connection with the device according to the invention are configured to be compliant-controlled so as to allow any kind of human-robot-collaboration during construction works.

The device according to the invention enables a method for the construction of high rising building stuctures, which method is not part of the present invention.

Such method may comprise the steps:
- applying concrete at predefined positions; and
- climbing up by a predefined distance, after the concrete has been applied;
wherein the method comprises the further step of
- GPS-controlling of the climbing movement and/or of the concrete application process so that the climbing movement and the concrete application process are coordinated.

As already mentioned, most preferably, but as regards the method not exclusively, the concrete application may be performed by way of additive manufacturing.

The method may further comprise the step of
- arranging rebars for reinforcement,
in which the arrangement process of the rebars is GPS-controlled in coordination with the climbing movement and/or the concrete application process.

Further, the method may comprise the step of
- levelling and dampening during manufacturing,
in which the levelling and dampening process is GPS-controlled in coordination with the climbing movement and/or the concrete application process and/or the arrangement process of the rebars.

Still further, according to the method the climbing movement of the entire system may be performed continuously or stepwise, wherein the climbing speed is coordinated with the concrete application process, also depending on the required hardening time for the concrete, and/or the rebar arrangement process.

The invention focuses both on the subject of the assembly of rebars and of the application of concrete at the same or at different positions and perhaps levels, which assembly and which application shall be performed at fairly dangerous elevations, and thus refer generally to a labour-intensive job as such.

In that currently existing 3D concrete printing technologies as well as rebar arrangement operations (by means of composite printing or cutting/bending of steel, as both will be preferably applied by 6 axle robotic manipulators) and corresponding gantry systems are adapted and configured to be combined and to function together with commonly known self-climbing mechanisms, the invention will eliminate the need for extensive and cumbersome formwork and rebar steel works.

In addition, due to its high mobility, the device or system according to the invention can easily be used in and adapted for new construction projects with minor modifications and reprogramming.

According to the invention commonly known Global Positioning Systems (GPS) are integrated in the entire device for manufacturing or constructing high rising building structures in such a way that the self-climbing mechanism, which may be hydraulically, electrically and mechanically driven or in a combination thereof, and the 3D concrete printing system as well as the 3D rebar steel cutting and bending robot or the rebar composite printing robot can climb to the next pouring position autonomously. This can be done through repetitive multiple steps or through continuous movements.

Several GPS-receivers may be used, but one GPS-receiver for the device may be enough to provide a precisely defined reference point, from which the self-climbing mechanism refers to as for the next climbing level. The printing robots and the cutting/bending robots relate their single operations from this reference point and accomplish the 3D printing operations with respect to the concrete or the rebar composites and the cutting/bending operation in accordance with a pre-defined layout of the building structure.

Continuous movement is based on the principle that the self-climbing mechanism is elevated with a pre-set vertical linear speed and the works done by workers and/or the robot technology as implemented for the different construction steps are adapted to the pre-set constant speed.

Alternatively, in multiple step techniques, the entire device for manufacturing or constructing high rising building structures is elevated by means of the self-climbing mechanism with incremental steps of preferably one full floor height from a certain position to the upper one after all man power/robot technology related works have been completed.

In both climbing options, the upward motion of the device with the self-climbing mechanism on the one hand and the positioning of arms of the different robots with respect to concrete printing, rebar steel cutting and bending and rebar composite printing on the other during all different automated working processes are all navigated by a control unit in combination with at least one integrated GPS receiver, which may be positioned within the device at any adequate location, while the levelling and dampening system is arranged and configured to stabilize the entire system for zero-error precision and best possible vibrational mitigation.

The levelling system may be, for example, a hydro-mechanical levelling and suspension system, such as shock absorbers with an active fluid pump. The system may be controlled via the GPS as well, but could also provide precise horizontal levels, if needed, by the use of commonly known gyro-type sensors. Particularly, it may be that the levelling function is only needed in case the self-climbing system fails in precision and, for whatever reasons, the entire system stays out of an exact horizontal level. The dampening function is needed to reduce or counter-act vibrations, which might be caused by the movements of the robot arms or manipulators or which might occur during pumping of concrete under high pressure, wind forces etc..

Further advantages and features of the device according to the present invention do become apparent from the description of the embodiment as shown in the accompanying drawings, in which
- Figs. 1 - 4: schematically show the device for the construction of high rising building structures according to the invention with the device being located at different levels of the structure due to the climbing movement of the self-climbing mechanism, respectively; and
- Fig. 5: schematically shows the device for the construction of high rising building structures from the top.

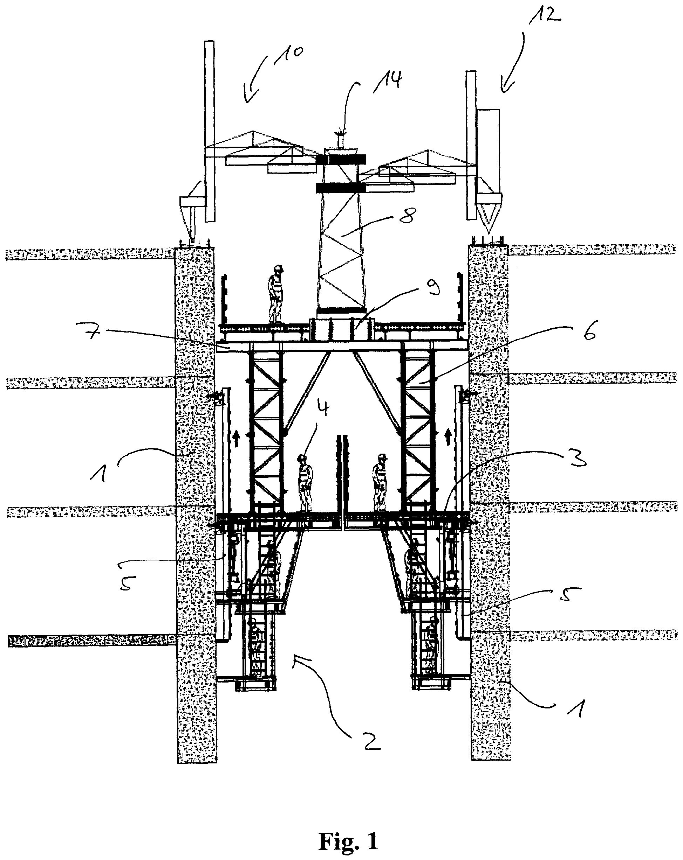

In the Figures 1 to 4 all components or modules of the device for manufacturing or constructing high rising building structures are only shown schematically so as to provide an example of the inventive principle. Single components and modules could have different configurations and embodiments, as e.g. known from the state of the art, as long as this is covererd by the invention, which is only defined by the appended claims.

In these Figures 1 to 4 the device according to the invention is shown to be arranged between two vertical walls 1 of a high rising building structure, e.g. a skyscraper extending over several storeys, which vertical walls 1 shall be built up or constructed by the device.

The device according to the invention basically is supported on and carried by a self-climbing mechanism 2.

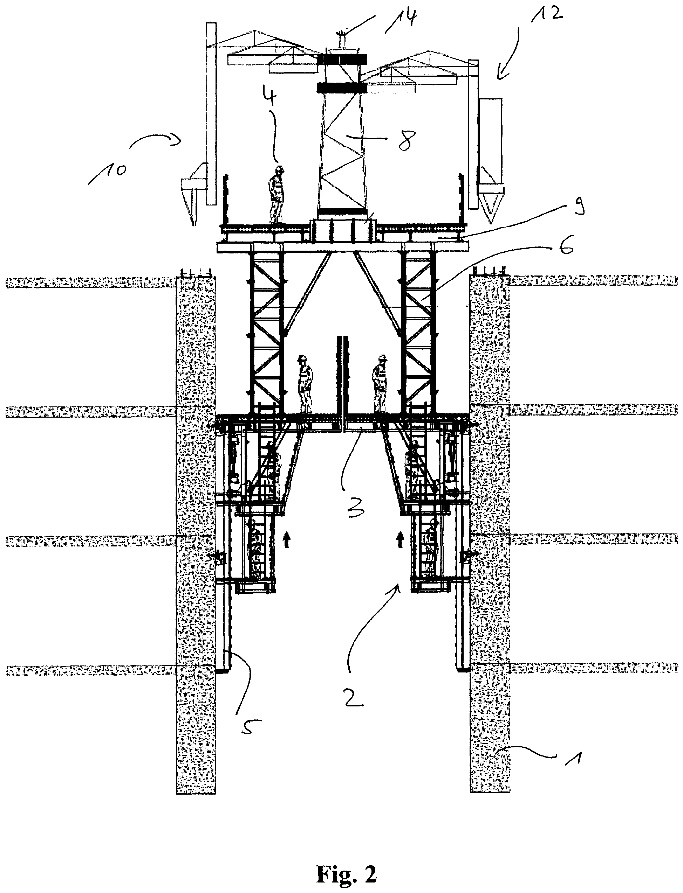

The self-climbing mechanism 2 comprises a lower platform 3, on which, e.g. workers 4, could move to perform any kind of work there. The lower platform 3 is guided on both sides at rails or self-climbing devices 5, as they are commonly known, and can thus be elevated upwards in a controlled way, as can be exemplarily seen from Fig. 2.

By means of some kind of scaffolding 6 an upper platform 7 is arranged, which platform 7 carries a structural pillar 8, which shall serve as the support for several robots.

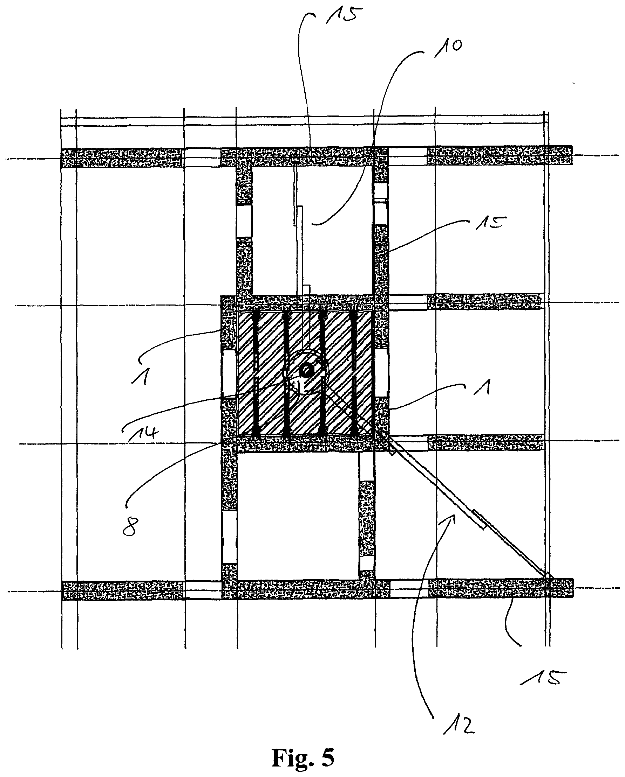

The pillar 8 is preferably arranged in the centre of the platform 7, so it is able to perform any work at any position surrounding the pillar 8, as best can be seen in Fig. 5.

The pillar 8 is supported on a levelling and dampening system 9, which includes vibration dampening means and precision levelling actuators of any known kind, so as to keep the entire mechanism stable and levelled during all processing steps.

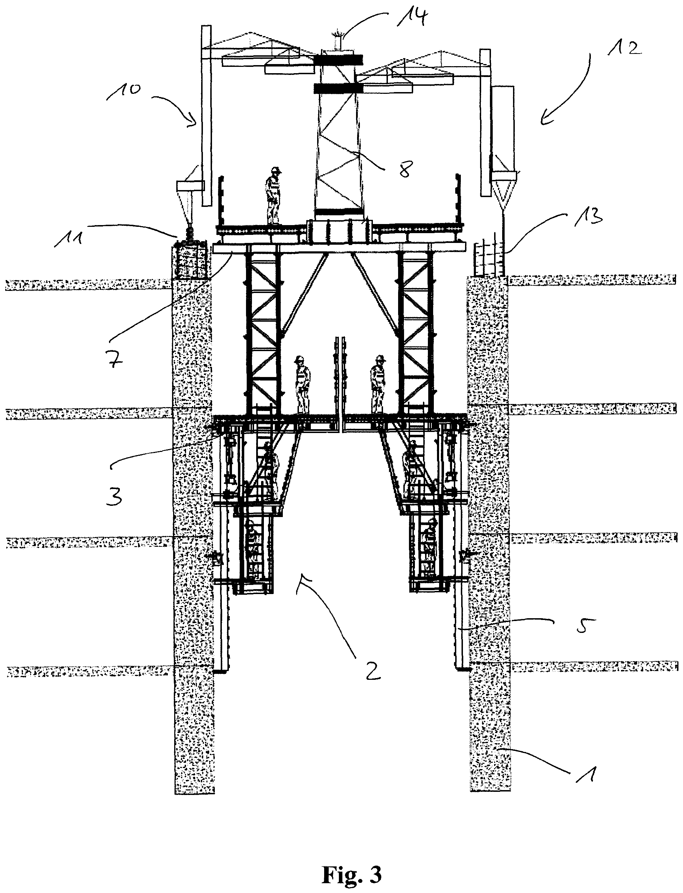

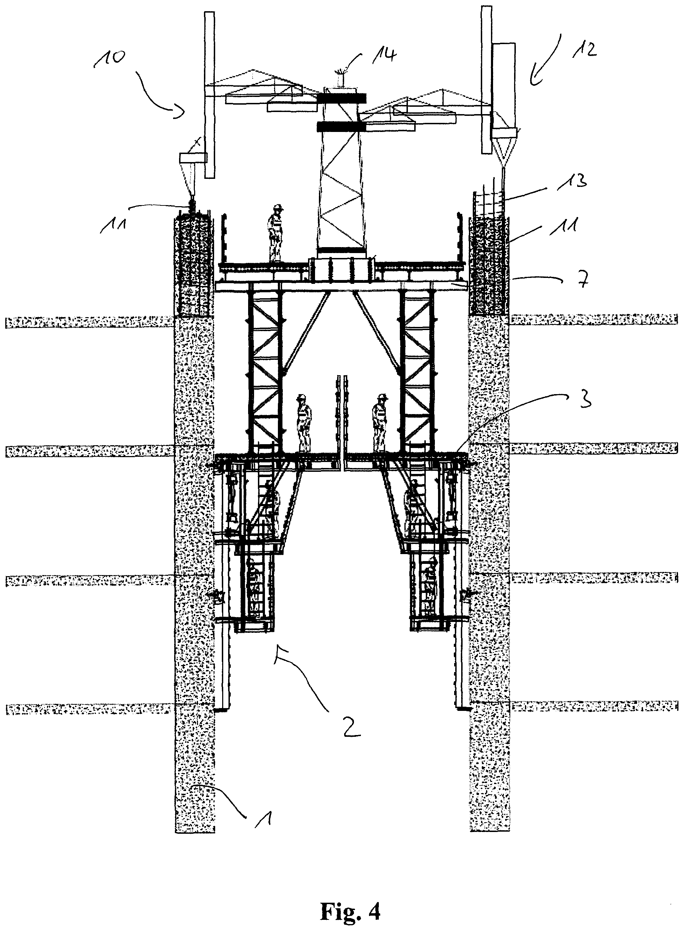

The pillar 8 carries on one side a concrete application mechanism 10 which is configured as a multi-axle robot in order to apply preferably quick-hardening concrete 11 in layers, as best can be seen in Figures 3 and 4.

On the other side, the pillar 8 carries a rebar arrangement mechanism 12, which is configured as a multi-axle robot as well. The robot applies a rebar composite 13 to create a reinforcement structure, which in the next step will be casted by the concrete 11, see Figures 3 and 4.

In other words, the entire construction, i.e. the arrangement of rebars 13 and the subsequent casting of concrete 11, will be performed by way of additive manufacturing methods.

The pillar 8 carries a GPS-receiver 14 of a GPS-system, which cooperates with a control unit for controlling the entire device, in particular for controlling and coordinating the levelling and dampening function, the application of concrete, the arrangement of rebars and the upward lifting movement and speed of it, so as to enable an overall autonomous and automated construction system.

In Fig. 5 the entire system is schematically shown from the top. As can be seen, the device according to the invention is configured and designed so as to allow that the concrete application mechanism 10 and the rebar arrangement mechanism 12 can perform their operations farther away from the self-climbing system 2, so that from a core structure being built by the walls 1, such as e.g. an elevator shaft of a skyscraper, in which the device travels up, also distant structures such as walls 15 of rooms, can be manufactured, depending on the possible extension lengths of the robot arms, respectively.

The invention will eliminate the need for formwork and labour for formwork, rebar steel works and geomatics services by adapting currently existing 3D concrete printing technology by means of 6 axle robot arms and gantry systems, a preferably hydro-mechanical self-climbing platform and a GPS (Global Positioning System)-system. In addition, due to the high versatility of the device according to the invention, it can easily be used in new projects with very minor modifications and reprogramming. As standardized platforms and scaffolding may be used, the system according to the invention can be adapted to any kind of building geometry and shape.

## Claims

1. Device for the construction of high rising building structures comprising a self-climbing mechanism (2), a concrete application mechanism (10) and a levelling and dampening system (9),
said concrete application mechanism (10) is configured to apply concrete (11) by additive manufacturing, and
further comprising a GPS-system (14), wherein the self-climbing mechanism (2) and the concrete application mechanism (10) are separately or commonly GPS-controlled by said GPS-system (14), so that the climbing movement of the self-climbing mechanism (2) and the spatial progress with respect to an additive manufacturing of the concrete application mechanism (10) are coordinated; **characterized in that** the device further comprises a rebar arrangement mechanism (12), whereby the rebar arrangement mechanism (12) is GPS-controlled by said GPS- system (14), so that the spatial progress with respect to an reinforcement process by means of rebars (13) is coordinated with the climbing movement of the self-climbing mechanism (2) and/or the spatial progress with respect to the additive manufacturing of the concrete application mechanism (10);
and in which the self-climbing mechanism (2) comprises at least one platform (7), which is an upper platform (7) supporting the concrete application mechanism (10), the rebar arrangement mechanism (12) and the levelling and dampening system (9);
and **in that** the platform (7) carries a structural pillar (8) supporting the concrete application mechanism (10) and the rebar arrangement mechanism (12), and **in that** the pillar (8) is supported on the levelling and dampening system (9) which includes vibration dampening means and precision levelling actuators, so as to keep the entire mechanism stable and levelled during all processing steps.

2. Device according to claim 1, in which the levelling and dampening system (9) is GPS-controlled by said GPS-system (14), so that a stabilization process of the levelling and dampening system (9) is coordinated with the climbing movement of the self-climbing mechanism (2) and/or the spatial progress with respect to the additive manufacturing of the concrete application mechanism (10) and/or the spatial progress with respect to the reinforcement process of the rebar arrangement mechanism (12).

3. Device according to claim 1 or 2, in which the rebar arrangement mechanism (12) comprises at least one robot having a manipulator for cutting and/or bending rebar steel.

4. Device according to claim 1 or 2, in which the rebar arrangement mechanism (12) comprises at least one robot having a manipulator for additively manufacturing rebar composites (13) .

5. Device according to one of claims 1 to 4, in which the concrete application mechanism (10) comprises at least one robot having a manipulator for guiding at least one concrete application device.

6. Device according to claim 5, in which the concrete application mechanism (10) comprises more than one robot, which robots are configured to apply concrete (11) commonly at one position or separately at different positions.

7. Device according to one of claims 3 to 6, in which the robot(s) is/are compliant-controlled so as to allow human-robot-collaboration.

8. Device according to one of claims 1 to 7, in which the platform (7) comprises formwork and /or scaffolding devices.

## Patentansprüche

1. Vorrichtung zum Bau von hohen Gebäuden aufweisend einen Selbstklettermechanismus (2), einen Betonaufbringungsmechanismus (10) und ein Nivellier- und Dämpfungssystem (9),
wobei der Betonaufbringungsmechanismus (10) zum Aufbringen von Beton (11) durch additive Herstellung konfiguriert ist, und ferner aufweisend ein GPS-System (14), wobei der Selbstklettermechanismus (2) und der Betonaufbringungsmechanismus (10) durch das GPS-System (14) getrennt oder gemeinsam GPS-gesteuert werden, so dass die Kletterbewegung des Selbstklettermechanismus (2) und der räumliche Fortschritt in Bezug auf eine additive Fertigung des Betonaufbringungsmechanismus (10) koordiniert werden;
**dadurch gekennzeichnet, dass**
die Vorrichtung ferner einen Bewehrungsanordnungsmechanismus (12) aufweist, wobei der Bewehrungsanordnungsmechanismus (12) durch das GPS-System (14) GPS-gesteuert ist, so dass der räumliche Fortschritt in Bezug auf einen Bewehrungsprozess mittels Bewehrungsstäben (13) mit der Kletterbewegung des Selbstklettermechanismus (2) und/oder dem räumlichen Fortschritt in Bezug auf die additive Herstellung des Betonaufbringungsmechanismus (10) koordiniert ist;
und bei dem der Selbstklettermechanismus (2) mindestens eine Plattform (7) aufweist, die eine obere Plattform (7) ist, die den Betonaufbringungsmechanismus (10), den Bewehrungsanordnungsmechanismus (12) und das Nivellier- und Dämpfungssystem (9) trägt;
und dass
die Plattform (7) eine Struktursäule (8) trägt, die den Betonaufbringungsmechanismus (10) und den Bewehrungsanordnungsmechanismus (12) trägt, und dass die Säule (8) von dem Nivellier- und Dämpfungssystem (9) getragen ist, das Vibrationsdämpfungsmittel und Präzisionsnivellierungsaktuatoren umfasst, um den gesamten Mechanismus während aller Verarbeitungsschritte stabil und nivelliert zu halten.

2. Vorrichtung nach Anspruch 1, bei der das Nivellier- und Dämpfungssystem (9) durch das GPS-System (14) GPS-gesteuert ist, so dass ein Stabilisierungsprozess des Nivellier- und Dämpfungssystems (9) mit der Kletterbewegung des Selbstklettermechanismus (2) und/oder dem räumlichen Fortschritt in Bezug auf die additive Herstellung des Betonaufbringungsmechanismus (10) und/oder dem räumlichen Fortschritt in Bezug auf den Bewehrungsprozess des Bewehrungsanordnungsmechanismus (12) koordiniert ist.

3. Vorrichtung nach Anspruch 1 oder 2, bei der der Bewehrungsanordnungsmechanismus (12) mindestens einen Roboter mit einem Manipulator zum Schneiden und/oder Biegen von Bewehrungsstahl aufweist.

4. Vorrichtung nach Anspruch 1 oder 2, bei der der Bewehrungsanordnungsmechanismus (12) mindestens einen Roboter mit einem Manipulator zur additiven Herstellung von Bewehrungsverbunden (13) aufweist.

5. Vorrichtung nach einem der Ansprüche 1 bis 4, bei der der Betonaufbringungsmechanismus (10) mindestens einen Roboter mit einem Manipulator zum Führen mindestens einer Betoniereinrichtung aufweist.

6. Vorrichtung nach Anspruch 5, bei der der Betonaufbringungsmechanismus (10) mehr als einen Roboter aufweist, wobei die Roboter so konfiguriert sind, dass sie Beton (11) gemeinsam an einer Position oder separat an verschiedenen Positionen aufbringen.

7. Vorrichtung nach einem der Ansprüche 3 bis 6, bei der der/die Roboter nachgiebigkeitsgeregelt ist/sind, um eine Mensch-Roboter-Kollaboration zu ermöglichen.

8. Vorrichtung nach einem der Ansprüche 1 bis 7, bei der die Plattform (7) Schalungs- und/oder Gerüstvorrichtungen aufweist.

## Revendications

1. Dispositif pour la construction de structures de construction à grande élévation comprenant un mécanisme auto-grimpant (2), un mécanisme d'application de béton (10) et un système de nivellement et d'amortissement (9),
ledit mécanisme d'application de béton (10) est configuré pour appliquer du béton (11) par fabrication additive, et comprenant en outre un système GPS (14), dans lequel le mécanisme auto-grimpant (2) et le mécanisme d'application de béton (10) sont contrôlés séparément ou en commun par GPS par ledit système GPS (14), de sorte que le mouvement d'ascension du mécanisme auto-grimpant (2) et la progression spatiale par rapport à une fabrication additive du mécanisme d'application de béton (10) sont coordonnés ; **caractérisé en ce que** le dispositif comprend en outre un mécanisme de disposition de barres d'armature (12), moyennant quoi
le mécanisme de disposition de barres d'armature (12) est contrôlé par GPS par ledit système GPS (14), de sorte que la progression spatiale par rapport à un processus de renforcement au moyen de barres d'armature (13) est coordonnée avec le mouvement de grimpe du mécanisme auto-grimpant (2) et/ou la progression spatiale par rapport à la fabrication additive du mécanisme d'application du béton (10) ;
et dans lequel le mécanisme auto-grimpant (2) comprend au moins une plate-forme (7), qui est une plate-forme supérieure (7) supportant le mécanisme d'application de béton (10), le mécanisme de disposition des barres d'armature (12) et le système de nivellement et d'amortissement (9) ;
et **en ce que**
la plate-forme (7) porte un pilier structurel (8) supportant le mécanisme d'application du béton (10) et le mécanisme de disposition des barres d'armature (12), et **en ce que** le pilier (8) est supporté par le système de nivellement et d'amortissement (9) qui comprend des moyens d'amortissement des vibrations et des actionneurs de nivellement de précision, de manière à maintenir l'ensemble du mécanisme stable et nivelé pendant toutes les étapes du traitement.

2. Dispositif selon la revendication 1, dans lequel le système de nivellement et d'amortissement (9) est contrôlé par GPS par ledit système GPS (14), de sorte qu'un processus de stabilisation du système de nivellement et d'amortissement (9) est coordonné avec le mouvement de grimpe du mécanisme auto-grimpant (2) et/ou la progression spatiale par rapport à la fabrication additive du mécanisme d'application du béton (10) et/ou la progression spatiale par rapport au processus de renforcement du mécanisme de disposition des barres d'armature (12) .

3. Dispositif selon la revendication 1 ou 2, dans lequel le mécanisme de disposition de barres d'armature (12) comprend au moins un robot ayant un manipulateur pour couper et/ou plier l'acier d'armature.

4. Dispositif selon la revendication 1 ou 2, dans lequel le mécanisme de disposition d'armatures (12) comprend au moins un robot ayant un manipulateur pour la fabrication additive de composites d'armatures (13).

5. Dispositif selon l'une des revendications 1 à 4, dans lequel le mécanisme d'application du béton (10) comprend au moins un robot ayant un manipulateur pour guider au moins un dispositif d'application du béton.

6. Dispositif selon la revendication 5, dans lequel le mécanisme d'application du béton (10) comprend plus d'un robot, lesquels robots sont configurés pour appliquer le béton (11) en commun à une position ou séparément à différentes positions.

7. Dispositif selon l'une des revendications 3 à 6, dans lequel le(s) robot(s) est/sont contrôlé(s) de manière souple afin de permettre une collaboration homme-robot.

8. Dispositif selon l'une des revendications 1 à 1, dans lequel la plateforme (7) comprend des dispositifs de coffrage et/ou d'échafaudage.
